# EUROPÄISCHE PATENTSCHRIFT

(11) **EP 4 299 306 B1**
(45) Veröffentlichungstag und Bekanntmachung des Hinweises auf die Patenterteilung: **15.01.2025**
(21) Anmeldenummer: 23181131.6
(22) Anmeldetag: 23.06.2023
(51) Int. Cl.: B32B 5/02, B32B 5/06, B32B 5/08, B32B 5/26, B32B 7/12

(54) **TEXTILES FLÄCHENGEBILDE UND VERFAHREN ZUR HERSTELLUNG EINES TEXTILEN FLÄCHENGEBILDES**
TEXTILE SHEET AND METHOD FOR PRODUCING A TEXTILE SHEET
STRUCTURE TEXTILE PLANE ET PROCÉDÉ DE FABRICATION D'UNE STRUCTURE TEXTILE PLANE

(30) Priorität: 29.06.2022 DE 102022116220
(43) Veröffentlichungstag der Anmeldung: 03.01.2024
(73) Patentinhaber: iprotex GmbH & Co. KG, 95213 Münchberg (DE)
(72) Erfinder: Bergmann, Norbert, 95213 Münchberg (DE)
(74) Vertreter: Kilian Kilian & Partner mbB

(56) Entgegenhaltungen:
- CN-A- 109 664 582
- US-A1- 2015 151 510
- US-A1- 2021 260 850

## Beschreibung

Die vorliegende Erfindung betrifft ein textiles Flächengebilde, insbesondere als Hitze- und / oder Brandschutz und ein Verfahren zur Herstellung desselben.

Rückrufe von Elektrofahrzeugen und Plug-in-Hybriden (PHEV), die plötzlich in Brand geraten können, werden immer wieder in den Medien beschrieben. Es sind Nachrichten wie diese, die die Diskussion um die Brandgefährlichkeit von Elektrofahrzeugen und PHEV immer wieder anfachen.

Auf dem Markt gibt es bereits verschiedene "behälterartige" bzw. "boxenartige" Systeme aus Metall-Kunststoff-Verbundmaterialien, die beispielsweise als Ummantelung für Batterien einen Hitzeschutz bieten sollen. Derartige Produkte sollen in der Automobilindustrie insbesondere für die Abkapselung von Batterien eingesetzt werden. Ein Hauptproblem hierbei ist jedoch das hohe Gewicht sowie die mangelnde Flexibilität und Steifigkeit der entsprechenden Materialien. Da die Automobilindustrie gehalten ist; die Fahrzeuggewichte nachhaltig zu reduzieren sowie den Ressourcenverbrauch zu senken, werden leichtere und flexiblere Materialien gefordert. Es wurden Textilien vorgeschlagen, welche aus verschiedenen Komponenten bestehen können, wie zum Beispiel Glasfasern, Aramid, Carbon, Hochleistungsfasern wie Polyphenylensulfid (PPS)-Fasern, Polyetheretherketone (PEEK)-Fasern oder auch Stahldrähte zur Gewebearmierung. Das hohe Gewicht, der Materialverbrauch sowie mangelnde Flexibilität und mangelnde Recyclingfähigkeit neben aufwändigen Fertigungsverfahren sowie Sperrigkeit und mangelnde Schutzwirkung der bekannten Produkte sind neben ihrem großen Volumen zu beanstanden.

Möglicherweise soll hier gleichzeitig das Crashverhalten der Fahrzeuge bei Aufprallunfällen verbessert werden. Hauptaufgabe der Produkte ist jedoch, die Entflammung der Fahrgastzelle zu vermeiden bzw. zu verzögern und Gefahr für die Fahrzeuginsassen und die Fahrzeugumgebung zu mindern. Gleichzeitig soll die Batterie leicht zugänglich sein und ebenso gegen äußere Einflüsse wie zum Beispiel hohe Außentemperaturen und Frost geschützt sein.

Weiterer Stand der Technik wird durch die US 2015/151510 A1, die US 2021/260850 A1 und die CN 109 664 582 A1 gebildet, wobei die US 2015/151510 A1 auf eine Verbundstoff-Flammensperre gerichtet ist, die zumindest zwei Schichten aus nichtgewebten schwer entflammbaren Fasern umfasst.

Die US 2021/260850 A1 ist auf einen Brandschutzartikel gerichtet, der eine Feuersperre mit einer Vielzahl von nicht-brennbaren Fasern und einen passiven Wärmeisolator enthält, der mit der Feuersperre verbunden ist und eine Vielzahl von nichtschmelzbaren Fasern umfasst.

Die CN 109 664 582 A1 ist auf ein flammhemmendes und wärmeisolierendes Verbundgewebe gerichtet, wobei die Oberflächenschicht des Gewebes ein Kettgarn aus einer Mischung aus einer Nitrilchloridfaser und einer blauen flammhemmenden Viskosefaser, und einem Schussgarn aus Aramid 1313, Aramid 1414 und einem leitfähigen Fasermischgarn ist.

Es ist eine Aufgabe der Erfindung, ein textiles Flächengebilde und ein Verfahren zur Herstellung desselben vorzuschlagen, bei welchem die aus dem Stand der Technik bekannten Nachteile vermieden oder zumindest stark vermindert werden können.

Die Aufgabe wird zunächst gelöst durch ein textiles Flächengebilde gemäß Anspruch 1, nämlich ein
textiles Flächengebilde, das
dadurch gekennzeichnet ist, dass es folgende Merkmale aufweist:
a) ein mit einer ersten Lage einer losen Mischung aus Paraaramid-Preox-Fasern zu einem ersten Vorprodukt vernadeltes flächiges Basalt- oder Silikatgewebe,
b) ein mit einer zweiten Lage einer losen Mischung aus Paraaramid-Preox-Fasern zu einem zweiten Vorprodukt vernadeltes flächiges Paraaramidgewebe oder Poly-p-phenylen-2,6-benzobisoxazol-Gewebe,
c) wobei das erste und das zweite Vorprodukt zu einem flächigen dritten Vorprodukt miteinander vernadelt sind, wobei die Lagen loser Mischungen aus Paraaramid-Preox-Fasern zueinander zeigen,
d) wobei das flächige dritte Vorprodukt eine Vorderseite aufweist, zu welcher das Basaltgewebe zeigt und eine Rückseite aufweist, zu welcher das Paraaramidgewebe zeigt,
e) wobei die Vorderseite und die Rückseite jeweils eine Keramikbeschichtung aufweisen.

Es handelt sich hier um ein textiles Flächengebilde, z. B. in Form einer textilen gewebeverstärkten Fasermatte, die vorteilhafterweise in ihrem Inneren weitestgehend homogen ist und welche selbst mit der beidseitigen Beschichtung vorteilhafterweise noch flexibel und gut formbar ist. Sie ist geeignet zum Einsatz z. B. in E-Autos als Schutzschild gegen hohe mechanische Energien, beispielsweise gegen unter hohem Druck aus einer defekten Batterie austretende Partikelstrahlen und kann gleichzeitig kurzzeitig sehr hohen Temperaturen bis 2200 °C standhalten. Ein großer Vorteil des erfindungsgemäßen textilen Flächengebildes gegenüber bekannten metallischen Produkten ist das geringe Gewicht bzw. die geringe Dichte. Das erfindungsgemäße textile Flächengebilde, dessen Materialauswahl und Verbundanordnung infolge umfangreicher Versuchsreihen gefunden wurde, hat sich aufgrund seiner herausragenden Eigenschaften für Batterie-Einhausungen in E-Fahrzeugen bewährt. Es verschafft im Falle eines Batteriebrandes bei einem E-Fahrzeug den Insassen ausreichend Zeit zum Verlassen des Fahrzeugs. Aufgrund der hervorragenden Brand- und Hitzeschutzeigenschaften kann das erfindungsgemäße textile Flächengebilde jedoch auch für Brand- und Hitzeschutz in anderen Fällen, zum Beispiel im Gebäude- und Fassadenbereich eingesetzt werden. Die Vorteile ergeben sich aus der erfindungsgemäßen vorteilhaften Kombination bereits bekannter Einzelmaterialien, wobei die Kombination, die Art der Kombination der Einzelmaterialien und deren Reihenfolge der Zusammenfügung entscheidend sind. Das erfindungsgemäße textile Flächengebilde kann vorteilhafterweise zur Aufnahme von und als Schutzschild gegen hohe/n mechanische/n Energien, insbesondere unter hohem Druck austretende Partikelstrahlen, bei gleichzeitig kurzzeitiger Beständigkeit gegen sehr hohe Temperaturen bis zu 2200 °C eingesetzt werden.

Eine vorteilhafte Ausbildung des erfindungsgemäßen textilen Flächengebildes ist dadurch gekennzeichnet, dass die Keramikbeschichtung auf der Rückseite mit einer Kleberschicht versehen ist. Diese Ausgestaltung vereinfacht vorteilhafterweise eine einfache korrekte Befestigung an einem damit zu beschichtenden oder zu ummantelnden Gegenstand sehr.

Eine weitere vorteilhafte Ausbildung des erfindungsgemäßen textilen Flächengebildes ist dadurch gekennzeichnet, dass die erste und die zweite Lage lose Mischungen von Paraaramid-Preox-Fasern mit einem 50 bis 70% Anteil an p-Aramid-Fasern und einem 50 bis 30% Anteil an Preox-Fasern aufweisen. Mit dieser erfindungsgemäßen Ausbildung wird aufgrund des 50 bis 70% Anteils an p-Aramid-Fasern eine erhebliche Verbesserung der mechanischen Festigkeit und Erhöhung der Temperaturstabilität ermöglicht, und aufgrund des 50 bis 30% Anteils an Preox-Fasern kann die Brandbeständigkeit des erfindungsgemäßen textilen Flächengebildes beträchtlich gesteigert werden.

Eine weitere vorteilhafte Ausbildung des erfindungsgemäßen textilen Flächengebildes ist dadurch gekennzeichnet, dass die selbstklebende Schicht (SK) aus einem, insbesondere armierten, Transferklebeband auf Acrylat- oder PU-Basis besteht.

Die Aufgabe wird weiterhin gelöst mit einem Verfahren gemäß Anspruch 5, nämlich einem
Verfahren zur Herstellung eines textilen Flächengebildes nach einem der Ansprüche 2 bis 4,
**gekennzeichnet,** durch folgende Schritte:
a) Vernadeln einer ersten Lage einer losen Mischung aus Paraaramid-Preox-Fasern mit einem Basalt- oder Silikatgewebe zu einem ersten Vorprodukt (A),
b) Vernadeln einer zweiten Lage einer losen Mischung aus Paraaramid-Preox-Fasern mit einem Paraaramidgewebe oder einem Poly-p-phenylen-2,6-benzobisoxazol-Gewebe zu einem zweiten Vorprodukt,
c) Vernadeln des ersten und des zweiten Vorprodukts zu einem dritten flächigen Vorprodukt, wobei die erste und die zweite Lage loser Mischungen aus Paraaramid-Preox-Fasern zueinander zeigen und
   wobei das flächige dritte Vorprodukt eine Vorderseite aufweist; zu welcher das Basaltgewebe zeigt und eine Rückseite aufweist, zu welcher das Paraaramidgewebe zeigt,
e) Versehen der Vorderseite und der Rückseite jeweils mit einer Keramikbeschichtung, vorzugsweise bestehend aus Keramikbestandteilen, Polyurethan und rotem Phosphor.

Das erfindungsgemäße Vernadeln von losen Mischungen aus Paraaramid-Preox-Fasern und Geweben hat den entscheidenden Vorteil der Gewichtsersparnis gegenüber bisher bekannten Lösungen, da eine als Schwachpunkt zu sehende Klebeverbindung zwischen den genannten Komponenten entfällt. Die Auswahl der genannten Rohstoffe und die erfindungsgemäße Anordnung derselben in Verbindung mit einer Beschichtung auf Vorder- und Rückseite gewährleisten einen hervorragenden Hitze- und Brandschutz. Die Hauptbestandteile der keramischen Beschichtung, beispielsweise aus Keramikbestandteilen, Polyurethan und rotem Phosphor sind flammhemmender und hitzeresistenter Natur.

Eine weitere vorteilhafte Ausbildung des erfindungsgemäßen Verfahrens zur Herstellung eines textilen Flächengebildes ist dadurch gekennzeichnet, dass die Rückseite mit einer Kleberschicht versehen wird. Das Ergebnis dieser mit geringem Aufwand zu erreichenden kostengünstigen Ausgestaltung vereinfacht vorteilhafterweise eine einfache korrekte Befestigung an einem damit zu beschichtenden oder zu ummantelnden Gegenstand sehr.

Das erfindungsgemäße textile Flächengebilde ist ausreichend flexibel und formbar, ohne dass die Beschichtung bricht oder Schaden nimmt.

Um die Erfindung weiter zu erläutern wird sie im Folgenden anhand eines Ausführungsbeispiel mit Hilfe einer Zeichnung kurz beschrieben.

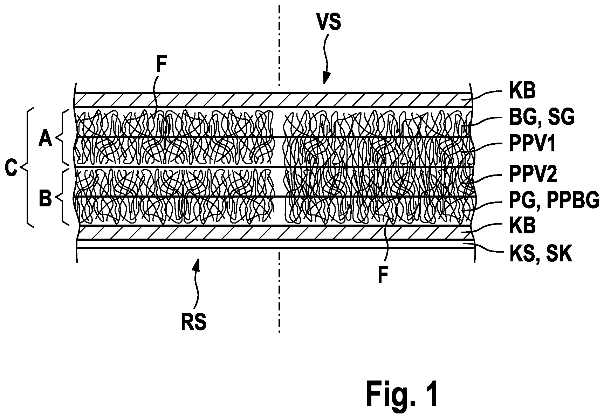

- Fig. 1: zeigt schematisch den Aufbau eines Ausführungsbeispiels eines erfindungsgemäßen textilen Flächengebildes im Schnitt.

Um den Aufbau eines Beispiels eines erfindungsgemäßen textilen Flächengebildes zu veranschaulichen ist in Fig. 1 ein solches in einer Schichtdarstellung in einem Ausschnitt, geschnitten von der Seite dargestellt. In Fig. 1, etwa linke Hälfte sind zunächst zwei miteinander zu einem Vorprodukt A beispielsweise mit einem Nadelstuhl vernadelte Schichten, ein mit einer ersten Lage PPV1 einer losen Mischung aus Paraaramid-Preox-Fasern zu einem ersten Vorprodukt A vernadeltes flächiges Basalt- oder Silikatgewebe BG, SG zu erkennen, wobei die Vernadelung durch von Fasern einer losen Mischung aus Paraaramid-Preox-Fasern einer ersten Lage PPV1 mit dem Basalt- oder Silikatgewebe BG, SG durch im Vernadelungsprozess verschlungene Fasern F dargestellt sein soll. Das Gleiche gilt (Fig. 1, etwa linke Hälfte) für das Vorprodukt B, welches zwei vernadelte Schichten, nämlich ein Paraaramidgewebe PG und eine zweite Lage PPV2 einer losen Mischung aus Paraaramid-Preox-Fasern PPV2 aufweist. Erfindungsgemäß kann anstelle des Paraaramidgewebes PG ein Poly-p-phenylen-2,6-benzobisoxazol-Gewebe PPBG alternativ zum Einsatz kommen. In der Folge des Herstellungsprozesses werden und sind, wie auf der rechten Seite der Fig. 1 schematisch dargestellt sein soll, die verschlungenen Fasern F der Vorprodukte A und B wiederum miteinander vernadelt, wobei das Vorprodukt C entsteht. In dieser Kombination wird es insgesamt möglich, eine homogene Vermischung der Fasern der einzelnen Schichten und eine Erhöhung des Volumens zu erreichen. Das bedeutet ein mechanisches Verbinden von Fasern aus Hochleistungswerkstoffen. Diese werden sozusagen in drei Dimensionen miteinander "verschlungen". Über die Vernadelung der textilen Halbzeuge Vorprodukte A und B bzw. danach C wird eine definierte Verstärkung durch Umorientierung der Fasern erreicht, wobei u.a. die Dichte und die Anhaftung der verschiedenen Schichten aneinander gezielt einstellbar sind. Der Fachmann nennt diese Technik auch Stapelfaservernadelung. Im Vernadelungsverfahren kann in einer ähnlichen Abfolge der Verfahrensschritte u.a. auch ein Schlauch hergestellt werden.

Das auf diese Art entstandene flächige Vorprodukt C wird auf beiden Oberflächen mit einer Keramikbeschichtung KB versehen. Dieses Gebilde weist eine Vorderseite VS und eine Rückseite RS auf. Auf der Rückseite RS des erfindungsgemäßen textilen Flächengebildes ist noch eine Kleberschicht KS, beispielsweise in Form einer selbstklebenden Folie SK aufgebracht worden. Das hier im Kontext mit seiner Herstellung beschriebene textile Flächengebilde kann nun auf jedwede Oberfläche, beispielsweise eine Fahrzeugbatterie flächig aufgetragen und z.B. aufgeklebt werden und wie oben bereits näher ausgeführt wurde, als Schutzschild gegen hohe mechanische Energien, insbesondere unter hohem Druck austretende Partikelstrahlen, bei gleichzeitig kurzzeitiger Beständigkeit gegen sehr hohe Temperaturen bis zu 2200 °C eingesetzt werden. Das hier beanspruchte und im Vorhergehenden beschriebene erfindungsgemäße textile Flächengebilde stellt ein hervorragendes Kombinationsgewebe, bestens geeignet zur Batterieabschirmung von Elektrofahrzeugen zum Schutz von Fahrzeuginsassen beim In-Brand-geraten oder bei Explosionsgeschehen von Batterien dar. Es ist geeignet, einige Zeit einer Kontakthitze von ca. 1500 °C zu widerstehen und für die Dauer von etwa 20 Sekunden einer Hitze von ca. 2300 °C zu widerstehen. Besonders hervorzuheben ist die Kombination der hohen mechanischen Festigkeit mit der hohen thermischen Beständigkeit.

Das erfindungsgemäße textile Flächengebilde kann neben der oben genannten Anwendung ebenso in anderen Bereichen verwendet werden, die ähnlichen Technologiebereichen angehören, z.B. Energiespeicher in allen möglichen Bereichen wie Wohnbereichen (Photovoltaik bzw. Solartechnik). Es verfügt ebenso über gewisse Isolierungseigenschaften und kann auch zum Thermomanagement verwendet werden.

## Patentansprüche

1. Textiles Flächengebilde,
**dadurch gekennzeichnet, dass** es folgende Merkmale aufweist:
a) ein mit einer ersten Lage (PPV1) einer losen Mischung aus Paraaramid-Preox-Fasern zu einem ersten Vorprodukt (A) vernadeltes flächiges Basalt- oder Silikatgewebe (BG, SG),
b) ein mit einer zweiten Lage (PPV2) einer losen Mischung aus Paraaramid-Preox-Fasern zu einem zweiten Vorprodukt (B) vernadeltes flächiges Paraaramidgewebe (PG) oder Poly-p-phenylen-2,6-benzobisoxazol-Gewebe (PPBG),
c) wobei das erste und das zweite Vorprodukt (A, B) zu einem flächigen dritten Vorprodukt (C) miteinander vernadelt sind, wobei die Lagen (PPV1, PPV2) loser Mischungen aus Paraaramid-Preox-Fasern zueinander zeigen,
d) wobei das flächige dritte Vorprodukt (C) eine Vorderseite (VS) aufweist, zu welcher das Basaltgewebe (BG) zeigt und eine Rückseite (RS) aufweist, zu welcher das Paraaramidgewebe (PG) zeigt,
e) wobei die Vorderseite (VS) und die Rückseite (RS) jeweils eine Keramikbeschichtung (KB) aufweisen.

2. Textiles Flächengebilde nach Anspruch 1, **dadurch gekennzeichnet, dass** die Keramikbeschichtung (KB) auf der Rückseite (RS) mit einer Kleberschicht (KS) versehen ist.

3. Textiles Flächengebilde nach Anspruch 2, **dadurch gekennzeichnet, dass** die erste und die zweite Lage (PPV1, PPV2) lose Mischungen von Paraaramid-Preox-Fasern mit einem 50 bis 70% Anteil an p-Aramid-Fasern und einem 50 bis 30% Anteil an Preox-Fasern aufweisen.

4. Textiles Flächengebilde nach Anspruch 2 oder 3, **dadurch gekennzeichnet, dass** eine selbstklebende Schicht (SK) aus einem, insbesondere armierten, Transferklebeband auf Acrylat- oder PU-Basis besteht oder gebildet ist.

5. Verfahren zur Herstellung eines textilen Flächengebildes nach Anspruch 1, **gekennzeichnet, durch** folgende Schritte:
a) Vernadeln einer ersten Lage (PPV1) einer losen Mischung aus Paraaramid-Preox-Fasern mit einem Basalt- oder Silikatgewebe (BG, SG) zu einem ersten Vorprodukt (A),
b) Vernadeln einer zweiten Lage (PPV2) einer losen Mischung aus Paraaramid-Preox-Fasern mit einem Paraaramidgewebe (PG) oder einem Poly-p-phenylen-2,6-benzobisoxazol-Gewebe (PPBG) zu einem zweiten Vorprodukt (B),
c) Vernadeln des ersten (A)und des zweiten (B) Vorprodukts zu einem dritten flächigen Vorprodukt (C), wobei die erste und die zweite Lage (PPV1, PPV2) loser Mischungen aus Paraaramid-Preox-Fasern zueinander zeigen und
wobei das flächige dritte Vorprodukt (C) eine Vorderseite (VS) aufweist; zu welcher das Basaltgewebe (BG) zeigt und eine Rückseite (RS) aufweist, zu welcher das Paraaramidgewebe (PG) zeigt,
e) Versehen der Vorderseite (VS) und der Rückseite (RS) jeweils mit einer Keramikbeschichtung (KB), vorzugsweise bestehend aus Keramikbestandteilen, Polyurethan und rotem Phosphor.

6. Verfahren zur Herstellung eines textilen Flächengebildes nach Anspruch 5, **dadurch gekennzeichnet, dass**
die Rückseite (RS) mit einer Kleberschicht (KS) versehen wird.

## Claims

1. Textile fabric
**characterized in that** it has the following features:
a) a flat basalt or silicate fabric (BG, SG) needled with a first layer (PPV1) of a loose mixture of paraaramid preox fibers to form a first preliminary product (A),
b) a flat paraaramid fabric (PG) or poly-p-phenylene-2,6-benzobisoxazole fabric (PPBG) needled with a second layer (PPV2) of a loose mixture of paraaramid preox fibers to form a second preliminary product (B),
c) wherein the first and second preliminary products (A, B) are needled together to form a flat third preliminary product (C), the layers (PPV1, PPV2) of loose blends of paraaramid preox fibers facing each other,
d) wherein the flat third preliminary product (C) has a front side (VS) to which the basalt fabric (BG) faces and a back side (RS) to which the paraaramid fabric (PG) faces,
e) whereby the front side (VS) and the back side (RS) each have a ceramic coating (KB).

2. Textile fabric according to claim 1, **characterized in that** the ceramic coating (KB) is provided with an adhesive layer (KS) on the back side (RS).

3. Textile fabric according to claim 2, **characterized in that** the first and second layers (PPV1, PPV2) comprise loose blends of paraaramid preox fibres with a 50 to 70% proportion of p-aramid fibres and a 50 to 30% proportion of preox fibres.

4. Textile fabric according to claim 2 or 3, **characterized in that** a self-adhesive layer (SK) consists of or is formed from an, in particular reinforced, transfer adhesive tape based on acrylate or PU.

5. Method for manufacturing a textile fabric according to claim 1,
**characterized by** the following steps:
a) needling of a first layer (PPV1) of a loose mixture of paraaramid preox fibers with a basalt or silicate fabric (BG, SG) to form a first preliminary product (A),
b) needling of a second layer (PPV2) of a loose mixture of paraaramid preox fibers with a paraaramid fabric (PG) or a poly-p-phenylene-2,6-benzobisoxazole fabric (PPBG) to form a second preliminary product (B),
c) needling of the first (A) and the second (B) preliminary product into a third flat preliminary product (C), the first and the second layer (PPV1, PPV2) of loose blends of paraaramid preox fibers facing each other, and
wherein the flat third preliminary product (C) has a front side (VS) to which the basalt fabric (BG) faces and a back side (RS) to which the paraaramid fabric (PG) faces,
e) Providing the front side (VS) and the back side (RS) each with a ceramic coating (KB), preferably consisting of ceramic components, polyurethane and red phosphorus.

6. Method for manufacturing a textile fabric according to claim 5, **characterized in that**
the back side (RS) is provided with an adhesive layer (KS).

## Revendications

1. Structure textile plane,
**caractérisée en ce qu'**elle présente les caractéristiques suivantes :
a) un tissu plan de basalte ou silicate (BG, SG) aiguilleté en un premier produit semi-fini (A) avec une première couche (PPV1) d'un mélange en vrac de fibres de para-aramide-préox,
b) un tissu plan de para-aramide (PG) ou un tissu plan de poly-p-phénylène-2,6-benzobisoxazole (PPBG) aiguilleté en un deuxième produit semi-fini (B) avec une deuxième couche (PPV2) d'un mélange en vrac de fibres de para-aramide-préox,
c) où le premier et le deuxième produits semifinis (A, B) sont aiguilletés ensemble en un troisième produit semi-fini plan (C), où les couches (PPV1, PPV2) présentent des mélanges en vrac de fibres de para-aramide-préox entre elles,
d) où le troisième produit semi-fini plan (C) présente une face avant (VS), vers laquelle pointe le tissu de basalte (BG) et présente une face arrière (RS), vers laquelle pointe le tissu de para-aramide (PG),
e) où la face avant (VS) et la face arrière (RS) présentent respectivement un revêtement en céramique (KB) .

2. Structure textile plane selon la revendication 1, **caractérisée en ce que** le revêtement en céramique (KB) est pourvu d'une couche adhésive (KS) sur la face arrière (RS) .

3. Structure textile plane selon la revendication 2, **caractérisée en ce que** la première et la deuxième couches (PPV1, PPV2) présentent des mélanges en vrac de fibres de para-aramide-préox avec une proportion de 50 à 70 % de fibres de p-aramide et une proportion de 50 à 30 % de fibres de préox.

4. Structure textile plane selon la revendication 2 ou 3, **caractérisée en ce qu'**une couche auto-collante (SK) se compose ou est formée d'une bande adhésive de transfert, en particulier renforcée, à base d'acrylate ou de PU.

5. Procédé de fabrication d'une structure plane textile selon la revendication 1, **caractérisée par** les étapes suivantes de :
a) aiguilletage d'une première couche (PPV1) d'un mélange en vrac de fibres de para-aramide-préox avec un tissu de basalte ou silicate (BG, SG) en un premier produit semi-fini (A),
b) aiguilletage d'une deuxième couche (PPV2) d'un mélange en vrac de fibres de para-aramide-préox avec un tissu de para-aramide (PG) ou un tissu de poly-p-phénylène-2,6-benzobisoxazole (PPBG) en un deuxième produit semi-fini (B),
c) aiguilletage du premier (A) et du deuxième (B) produit semi-fini en un troisième produit semi-fini plan (C), où la première et la deuxième couches (PPV1, PPV2) présentent des mélanges en vrac de fibres de para-aramide-préox entre elles et
où le troisième produit semi-fini plan (C) présente une face avant (VS) ; vers laquelle pointe le tissu de basalte (BG) et présente une face arrière (RS), vers laquelle pointe le tissu de para-aramide (PG),
e) dotation de la face avant (VS) et de la face arrière (RS) respectivement d'une couche en céramique (KB), de préférence constituée de composants en céramique, polyuréthane et phosphore rouge.

6. Procédé de fabrication d'une structure plane textile selon la revendication 5, **caractérisée en ce que**
la face arrière (RS) est dotée d'une couche adhésive (KS) .
